# EUROPÄISCHE PATENTSCHRIFT

(11) **EP 0 241 413 B1**
(45) Veröffentlichungstag und Bekanntmachung des Hinweises auf die Patenterteilung: **03.03.1993**
(21) Anmeldenummer: 87810122.9
(22) Anmeldetag: 04.03.1987
(51) Int. Cl.: C09B 69/04, C08K 5/34

(54) **Neue Aminsalze von Azoverbindungen**
Amine salts of azo compounds
Sels d'amine de composés azoiques

(30) Priorität: 10.03.1986 CH 961/86
(43) Veröffentlichungstag der Anmeldung: 14.10.1987
(73) Patentinhaber: CIBA-GEIGY AG, 4002 Basel (CH)
(72) Erfinder: Hari, Stefan, Dr., CH-1752 Villars-sur-Glâne (CH); Cseh, Georg, Dr., CH-1726 Posat (CH)

(56) Entgegenhaltungen:
- EP-A- 0 073 972
- EP-A- 0 225 553
- DE-A- 2 616 981
- FR-A- 2 078 361
- GB-A- 1 353 521
- US-A- 3 802 836

## Beschreibung

Die vorliegende Erfindung betrifft neue Aminsalze von Azoverbindungen, Verfahren zu deren Herstellung, sowie ihre Verwendung zum Färben von hochmolekularem organischem Material.

Aminsalze von Azoverbindungen sind bekannt. So sind beispielsweise in der Europäischen Patentanmeldung Nr. 0073972 Ammoniumsalze von sulfonsäuregruppenhaltigen Azofarbstoffen der Pyrazolonreihe beschrieben. Derartige Verbindungen werden als Pigmente zum Färben von Kunststoffen eingesetzt. Die DE-A-2616981 beschreibt Metallsalze von Sulfonsäuregruppenhaltigen Azofarbstoffen der Pyrazolonreihe sowie deren Verwendung als Pigmente Allerdings genügen keine der vorbeschriebenen Pigmente allen Anforderungen.

Gegenstand der vorliegenden Erfindung sind Verbindungen der Formel (I) 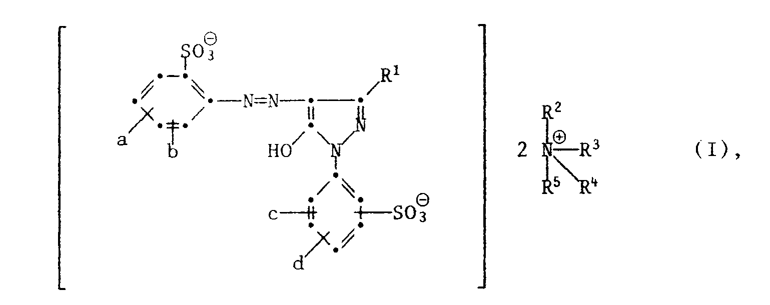
worin
a und b unabhängig voneinander Halogen, -CH₃, -C₂H₅, -OCH₃, -OC₂H₅ oder die Gruppe der Formel -NHCOC₁-C₄-Alkyl, c und d unabhängig voneinander -H, Halogen, -CH₃, -C₂H₅, -OCH₃, -OC₂H₅ oder die Gruppe der Formel -NHCOC₁-C₄-Alkyl und R¹ -CH₃, Phenyl, -COOCH₃, -COOC₂H₅, -NHCO-C₁-C₄-Alkyl oder -CONH-C₁-C₄-Alkyl bedeuten, und R², R³, R⁴ und R⁵ unabhängig voneinander -H, unsubstituiertes oder durch ein Chloratom oder eine HO-Gruppe substituiertes C₁-C₄-Alkyl, C₇-C₉-Aralkyl, C₅-C₈-Cycloalkyl, unsubstituiertes oder durch ein bis drei Halogenatome, Methyl- oder Methoxy-Gruppen substituiertes Phenyl, einen heterocyclischen Rest der Benzimidazol-, Benzoxazol-, Benzthiazol- oder Pyridin-reihe bedeuten, oder R³ und R⁴ zusammen mit dem Stickstoffatom einen Pyrrolidin-, Imidazolidin-, Piperidin-, Piperazin- oder Morpholinrest, oder R³, R⁴ und R⁵ zusammen mit dem Stickstoffatom einen Pyrrol-, Pyridin-, Picolin-, Pyrazin-, Chinolin- oder Isochinolinrest darstellen.

C₁-C₄-Alkyl in den Resten -NHCO-C₁-C₄-Alkyl und -CONH-C₁-C₄-Alkyl ist z.B. Methyl, Aethyl, n-Propyl, Isopropyl, n-Butyl und tert.-Butyl, insbesondere aber Methyl.

Stellen a, b, c und d Halogen dar und ist Phenyl als R², R³, R⁴ und R⁵ durch Halogen substituiert, so handelt es sich dabei um Fluor, Chlor, Brom oder Jod, insbesondere um Chlor oder Brom, bevorzugt aber um Chlor.

Bedeuten R², R³, R⁴ und R⁵ C₁-C₄-Alkyl, so handelt es sich dabei beispielsweise um Methyl, Aethyl, n-Propyl, Isopropyl, n-Butyl und tert.-Butyl.

Durch ein Chloratom oder eine HO-Gruppe substituiertes C₁-C₄-Alkyl ist z.B. β-Chloräthyl oder 2-Hydroxyäthyl.

C₇-C₉-Aralkyl als R², R³, R⁴ und R⁵ ist z.B. Benzyl und Aethylphenyl.

C₅-C₈-Cycloalkyl ist z.B. Cyclopentyl, Cyclohexyl, Cycloheptyl und Cyclooctyl.

Bei den heterocyclischen Resten der Benzimidazol-, Benzoxazol-, Benzthiazol- und Pyridin-reihe handelt es sich beispielsweise um Reste, die sich von 5-Aminobenzimidazol, 5-Amino-2-methylbenzimidazol, 5-Aminobenzoxazol, 5-Aminobenzthiazol, 2-Amino-6-äthoxybenzthiazol, 2-Aminobenzimidazol, 2-, 3- oder 4-Aminopyridin ableiten.

Von besonderer Bedeutung sind Verbindungen der Formel (I), worin a und b unabhängig voneinander -Cl, -Br, -CH₃ oder -OCH₃, c und d unabhängig voneinander -H, -Cl, -Br, -CH₃ oder -OCH₃, R¹ -CH₃, -COOC₂H₅, -CONHCH₃ oder -NHCOCH₃ und R², R³, R⁴ und R⁵ unabhängig voneinander -H oder -CH₃ darstellen.

Von ganz besonderer Bedeutung sind Verbindungen der Formel (I), worin a und b unabhängig voneinander -Cl oder -CH₃, c und d unabhängig voneinander -H, -Cl oder -CH₃, R¹ -CH₃ und R², R³, R⁴ und R⁵ -H bedeuten.

Die Herstellung der Verbindungen der Formel (I) erfolgt beispielsweise durch Umsetzung einer Diazoverbindung eines Amins der Formel (II) 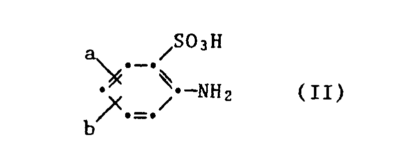
mit einer Kupplungskomponente der Formel (III) 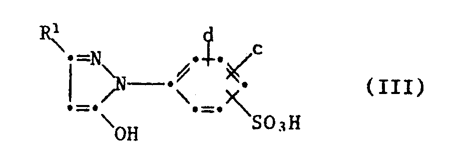
nach an und für sich bekannten Reaktionsbedingungen, und anschliessende Behandlung des erhaltenen Reaktionsproduktes, bevorzugt in der Form seiner freien Disulfonsäure, mit einer Verbindung in der Form ihres Chlorides oder Sulfates der Formel (IV) 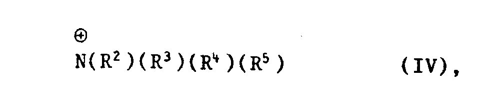
wobei in den obigen Formeln (II), (III) und (IV) a, b, c, d, R¹ und R² bis R⁵ die oben angegebene Bedeutung haben.

An Stelle des Chlorides oder des Sulfates dieser Verbindung kann auch hierfür die freie Verbindung verwendet werden.

Eine Verfahrensvariante besteht darin, dass die Diazotierungs- und Kupplungsstufe ohne Verwendung einer anorganischen Säure durchgeführt werden, indem das zu diazotierende Amin der Formel (II) und die Kupplungskomponente der Formel (III) in Wasser oder in einem organischen Lösungsmittel mit der stöchiometrischen Menge eines Nitrites, wie beispielsweise NaNO₂, vermischt werden und die erhaltene Azoverbindung nach üblichen Methoden in die Verbindung der Formel I übergeführt wird.

Beispiele für Amine der Formel (III) sind:
2-Amino-3-methyl-5-chlor-benzolsulfonsäure, 2-Amino-3,4-dichlorbenzolsulfonsäure, 2-Amino-3,5-dichlor-benzolsulfonsäure, 2-Amino-3,5-dimethyl-benzolsulfonsäure, 2-Amino-4,5-dimethyl-benzolsulfonsäure, 2-Amino-4-chlor-5-acetylamino-benzolsulfonsäure, 2-Amino-4-methoxy-5-acetylamino-benzolsulfonsäure, 2-Amino-4-chlor-5-methylbenzolsulfonsäure, 2-Amino-4-methyl-5-chlor-benzolsulfonsäure, 2-Amino-4,5-dichlor-benzolsulfonsäure, 2-Amino-4-chlor-5-methoxybenzolsulfonsäure.

Beispiele für Kupplungskomponenten der Formel (III) sind:
1-(2'-Sulfophenyl)-3-methyl-5-pyrazolon;
1-(4',5'-Dichlor-2'-sulfophenyl)-3-methyl-5-pyrazolon,
1-(3'-Sulfophenyl)-3-methyl-5-pyrazolon,
1-(6'-Chlor-3'-sulfophenyl)-3-methyl-5-pyrazolon,
1-(4'-Sulfophenyl)-3-methyl-5-pyrazolon,
1-(2'-Chlor-6'-methyl-4'-sulfophenyl)-3-methyl-5-pyrazolon,
1-(2'-Methyl-4'-sulfophenyl)-3-methyl-pyrazolon,
1-(2',5'-Dichlor-4'-sulfophenyl)-3-methyl-pyrazolon,
1-(3'-Sulfophenyl)-3-carbomethoxy-5-pyrazolon,
1-(2',5'-Dichlor-4'-sulfophenyl)-3-carbomethoxy-5-pyrazolon,
1-(3'-Sulfophenyl)-3-carboäthoxy-5-pyrazolon,
1-(2',5'-Dichlor-4'-sulfophenyl)-3-carboäthoxy-5-pyrazolon,
1-(3'-Sulfophenyl)-3-(N-methylcarbamyl)-5-pyrazolon,
1-(3'-Sulfophenyl)-3-acetylamino-5-pyrazolon,
1-(2',5'-Dichlor-4'-sulfophenyl)-3-acetylamino-5-pyrazolon.

Beispiele für freie Verbindungen gemäss Formel (IV) sind:
Ammoniak, Methylamin, Aethylamin, n-Propylamin, n-Butylamin, Cyclohexylamin, Benzylamin, Anilin, 2-Chloranilin, 2-, 3- oder 4-Methylanilin, 2,4-Dimethylanilin, 2,4,6-Trimethylanilin, Dimethylamin, Trimethylamin, Tetramethylamin, 2-, 3- oder 4- Aminopyridin, Morpholin, Piperidin, 2-, 3- oder 4-Picolin sowie Pyridin.

Die Verbindungen der Formel (I) können als Pigmente zum Färben von hochmolekularem organischem Material verwendet werden. Dabei lassen sie sich im allgemeinen direkt in der Form einsetzen, wie sie nach ihrer Synthese anfallen. Je nach Verwendungszweck kann man die erfindungsgemässen Verbindungen der Formel (I) in eine deckendere oder transparentere Form überführen.

Wird eine deckendere Pigmentform gewünscht, so erweist sich in der Regel eine thermische Nachbehandlung in Wasser oder in einem organischen Lösungsmittel als zweckmässig, gegebenenfalls unter Druck. Vorzugsweise verwendet man organische Lösungsmittel, wie durch Halogenatome, Alkyl- oder Nitrogruppen substituierte Benzole, wie Xylole, Chlorbenzol, o-Dichlorbenzol oder Nitrobenzol, sowie Pyridinbasen, wie Pyridin, Picolin oder Chinolin, ferner Ketone, wie Cyclohexanon, Alkohole, wie Isopropanol, Butanole oder Pentanole, Aether, wie Aethylenglykomonomethyl- oder -monoäthyläther, Amide, wie Dimethylformamid oder N-Methylpyrrolidon, sowie Dimethylsulfoxid oder Sulfolan. Man kann die Nachbehandlung auch in Wasser, gegebenenfalls unter Druck, in Gegenwart von organischen Lösungsmitteln und/oder mit Zusatz von oberflächenaktiven Substanzen durchführen.

Hochmolekulare organische Materialien, die mit den erfindungsgemässen Verbindungen der Formel (I) gefärbt bzw. pigmentiert werden können, sind z.B. Celluloseäther und -ester, wie Aethylcellulose, Nitrocellulose, Celluloseacetat, Cellulosebutyrat, natürliche Harze oder Kunstharze, wie Polymerisationsharze oder Kondensationsharze, wie Aminoplaste, insbesondere Harnstoff- und Melamin-Formaldehydharze, Alkydharze, Phenoplaste, Polycarbonate, Polyolefine, Polystyrol, Polyvinylchlorid, Polyamide, Polyurethane, Polyester, ABS, Polyphenylenoxide, Gummi, Casein, Silikon und Silikonharze, einzeln oder in Mischungen.

Besonders geeignet sind die Verbindungen der Formel (I) zum Einfärben von Polyvinylchlorid und Polyolefinen, wie Polyäthylen und Polypropylen.

Die erwähnten hochmolekularen organischen Verbindungen können einzeln oder in Gemischen als plastische Massen, Schmelzen oder in Form von Spinnlösungen, Lacken, Anstrichstoffen oder Druckfarben vorliegen. Je nach Verwendungszweck erweist es sich als vorteilhaft, die erfindungsgemässen Verbindungen der Formel (I) als Toner oder in Form von Präparaten einzusetzen.

Bezogen auf das zu pigmentierende hochmolekulare organische Material setzt man die erfindungsgemässen Verbindungen der Formel (I) beispeilsweise in einer Menge von 0,1 bis 30 Gew. %, vorzugsweise aber in einer Menge von 0,1 bis 10 Gew. %, ein.

Die Pigmentierung der hochmolekularen organischen Substanzen mit den erfindungsgemässen Verbindungen der Formel (I) erfolgt beispielsweise derart, dass man eine solche Verbindung gegebenenfalls in Form von Masterbatches diesen Substraten unter Verwendung von Walzwerken, Misch- oder Mahlapparaten zumischt. Das pigmentierte Material wird hierauf nach an sich bekannten Verfahren, wie Kalandrieren, Pressen, Strangpressen, Streichen, Giessen oder Spritzgiessen, in die gewünschte endgültige Form gebracht. Oft ist es erwünscht, zur Herstellung von nicht starren Formlingen oder zur Verringerung ihrer Sprödigkeit den hochmolekularen Verbindungen vor der Verformung sogenannte Weichmacher einzuverleiben. Als solche können z.B. Ester der Phosphorsäure, Phthalsäure oder Sebacinsäure dienen. Die Weichmacher können vor oder nach der Einverleibung der erfindungsgemässen Verbindungen der Formel (I) in die Polymeren eingearbeitet werden. Zwecks Erzielung verschiedener Farbtöne ist es ferner möglich, den hochmolekularen organischen Stoffen neben den erfindungsgemässen Verbindungen der Formel (I) noch Füllstoffe bzw. andere farbgebende Bestandteile, wie Weiss-, Bunt- oder Schwarzpigmente, in beliebigen Mengen zuzufügen.

Zum Pigmentieren von Lacken und Druckfarben werden die hochmolekularen organischen Materialien und die erfindungsgemässen Verbindungen der Formel (I) gegebenenfalls zusammen mit Zusatzstoffen, wie Füllmitteln, anderen Pigmenten, Siccativen oder Weichmachern, in einem gemeinsamen organischen Lösungsmittel oder Lösungsmittelgemisch fein dispergiert bzw. gelöst. Man kann dabei so verfahren, dass man die einzelnen Komponenten für sich oder auch mehrere gemeinsam dispergiert bzw. löst, und erst hierauf alle Komponenten zusammenbringt.

In Färbungen, beispielsweise von Polyvinylchlorid oder Polyolefinen, zeichnen sich die Verbindungen der Formel (I) durch gute allgemeine Pigmenteigenschaften, wie gute Dispergierbarkeit, hohe Farbstärke und Reinheit, gute Migrations-, Hitze-, Licht- und Wetterbeständigkeit sowie gute Deckkraft aus.

In den nachfolgenden Beispielen bedeuten die Prozente Gewichtsprozente.

### Beispiel 1: 5,2 g der Azoverbindung der Formel

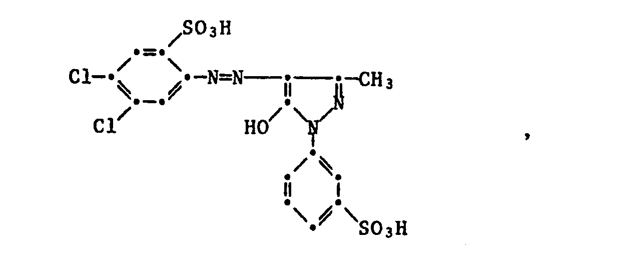

herstellbar nach an sich bekannten Verfahren, werden in einer Mischung von 50 ml Essigsäure und 50 ml entionisiertem Wasser bei Raumtemperatur gelöst. Die erhaltene klare dunkelrote Lösung wird innerhalb von 2 Minuten mit einer Lösung von 2,6 g Anilinhydrochlorid in 10 ml destilliertem Wasser versetzt. Die entstandene orange-gelbe Suspension wird während 3 Stunden bei Raumtemperatur gerührt und filtriert. Der Rückstand wird mit 100 ml entionisiertem Wasser gewaschen und im Vakuum bei 60°C getrocknet. Man erhält 5,1 g eines intensiv-orangen Pulvers der Formel

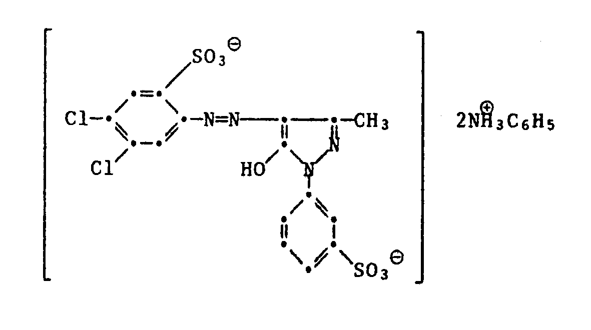

| | | | | | | |
|---|---|---|---|---|---|---|
| Analyse: | Ber. (in %): | C 48,49, | H 3,78; | Cl 10,22; | H 12,11; | S 9,24; |
| | Gef. (in %): | C 48,32; | H 3,87; | Cl 10,46; | N 12,20; | S 8,90. |

Diese Verbindung färbt Polyvinylchlorid und Polyäthylen in farbstarken echten gelben Tönen.

Anstelle von Anilinhydrochlorid kann man andere, in der folgenden Tabelle aufgeführte Aminhydrochloride verwenden, wobei die Verbindungen der folgenden Formel 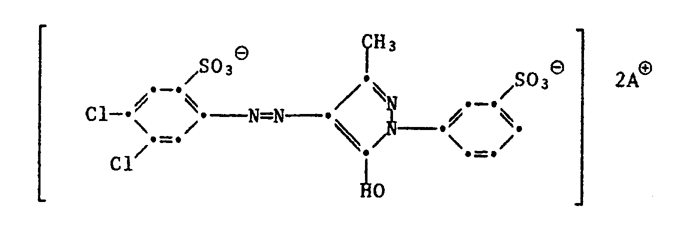
gemäss den im obigen Beispiel 1 angegebenen Verfahrensbedingungen erhalten werden.

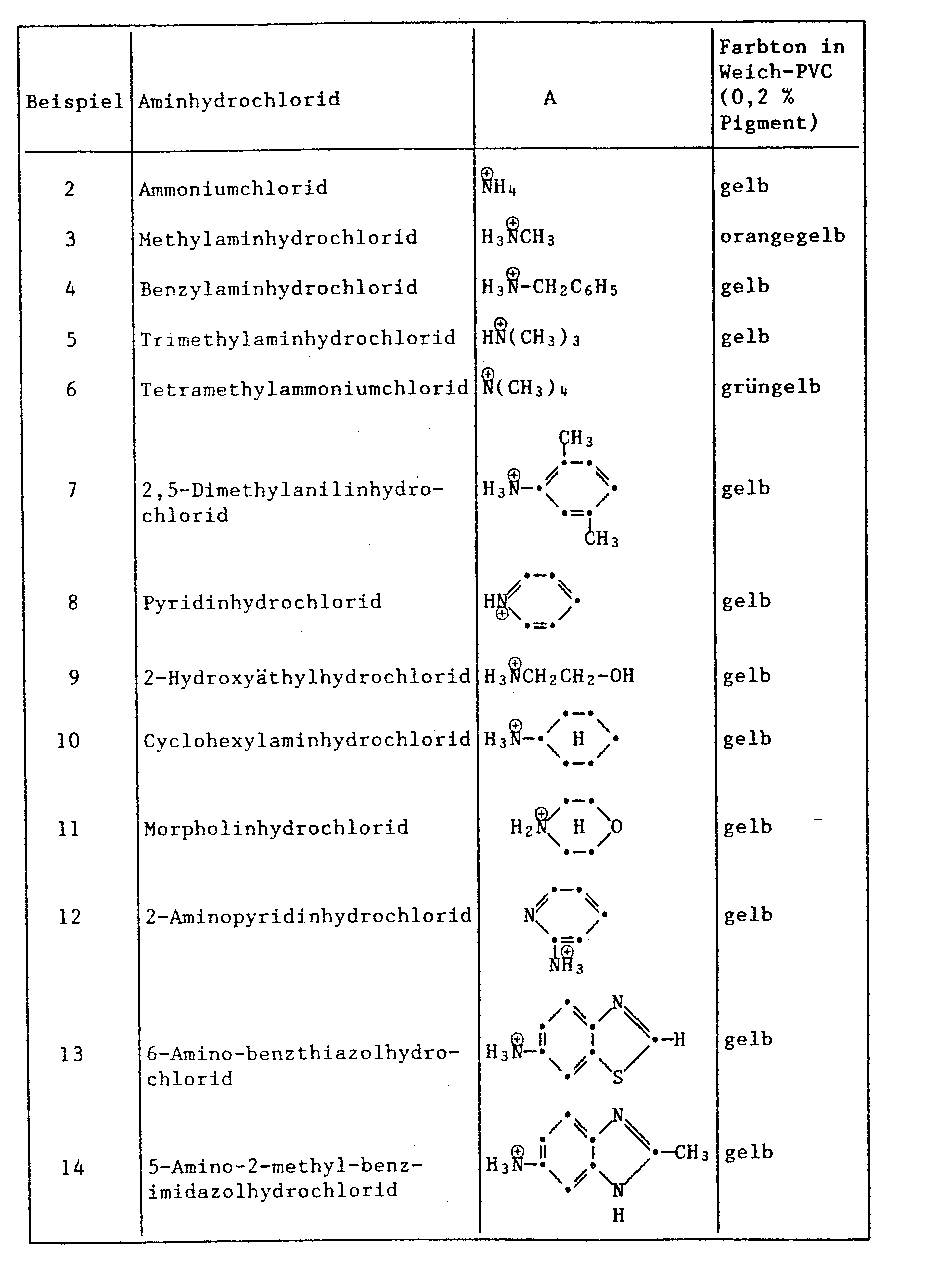

Beispiel 15: 15,4 g 36%iges Dinatriumsalz der im Beispiel 1 angegebenen Azoverbindung und 4,4 g Ammoniumchlorid werden in 100 ml entionisiertem Wasser auf 80°C erhitzt. Man rührt die intensiv-gelbe Suspension während 4 Stunden bei dieser Temperatur, lässt sie auf Raumtemperatur abkühlen und filtriert sie ab. Der erhaltene Rückstand wird mit wenig entionisiertem Wasser gewaschen und im Vakuum bei 60°C getrocknet. Man erhält 5,1 g (94,2 % d. Th.) eines Produktes, das strukturell und in allen Eigenschaften mit dem Pigment gemäss Beispiel 2 identisch ist. Auf analoge Weise können weitere erfindungsgemässe Verbindungen der Formel I ausgehend von einem in der folgenden Tabelle aufgeführten Amin der Formel II, einer Kupplungskomponente der Formel III und einem Amin der Formel IV hergestellt werden.

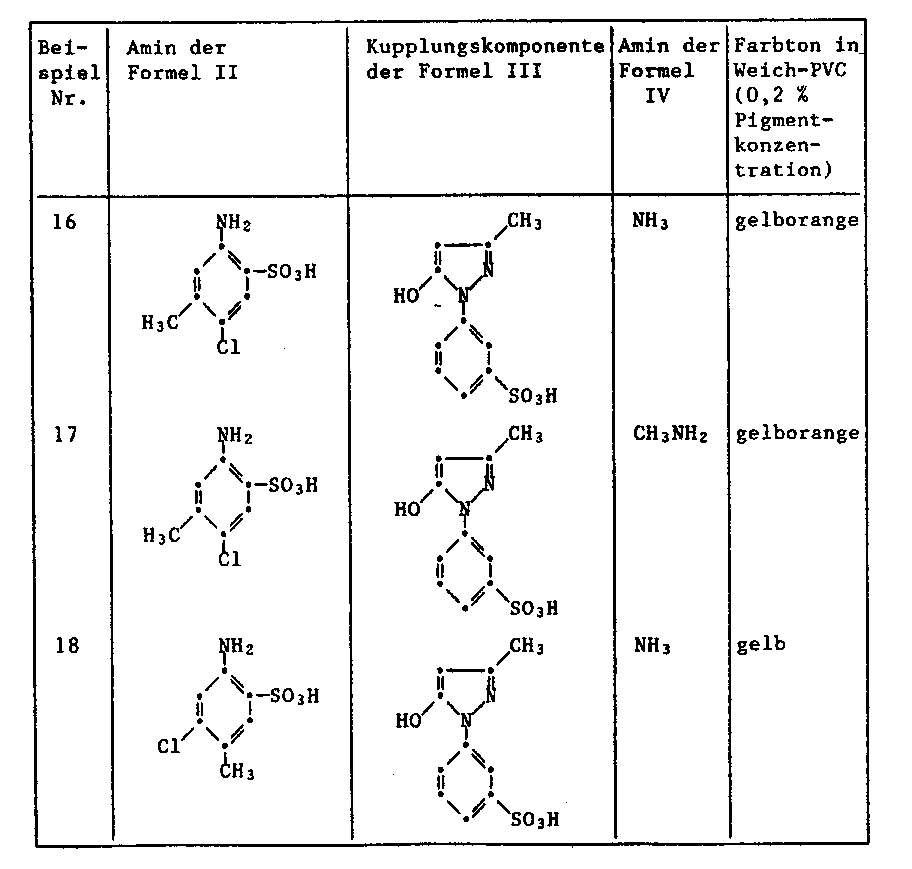

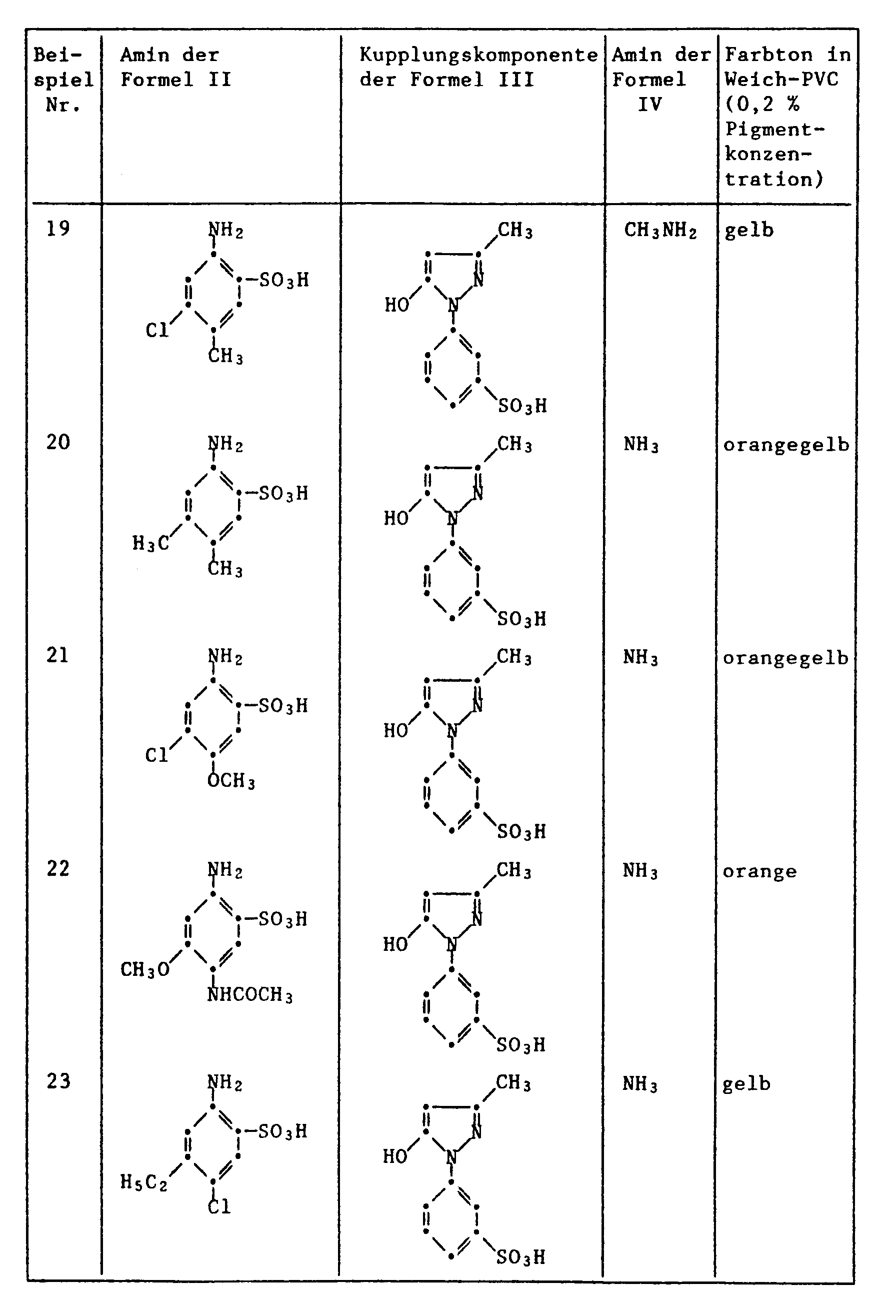

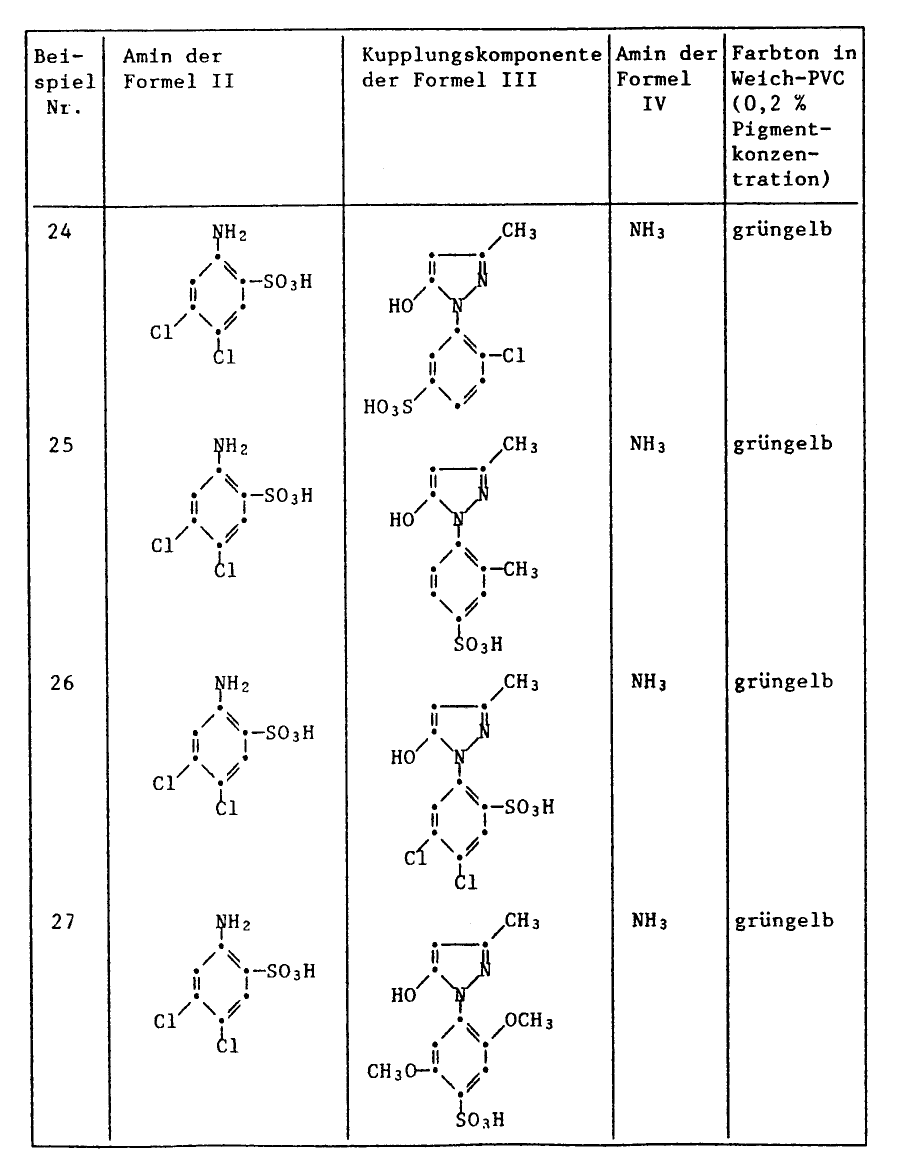

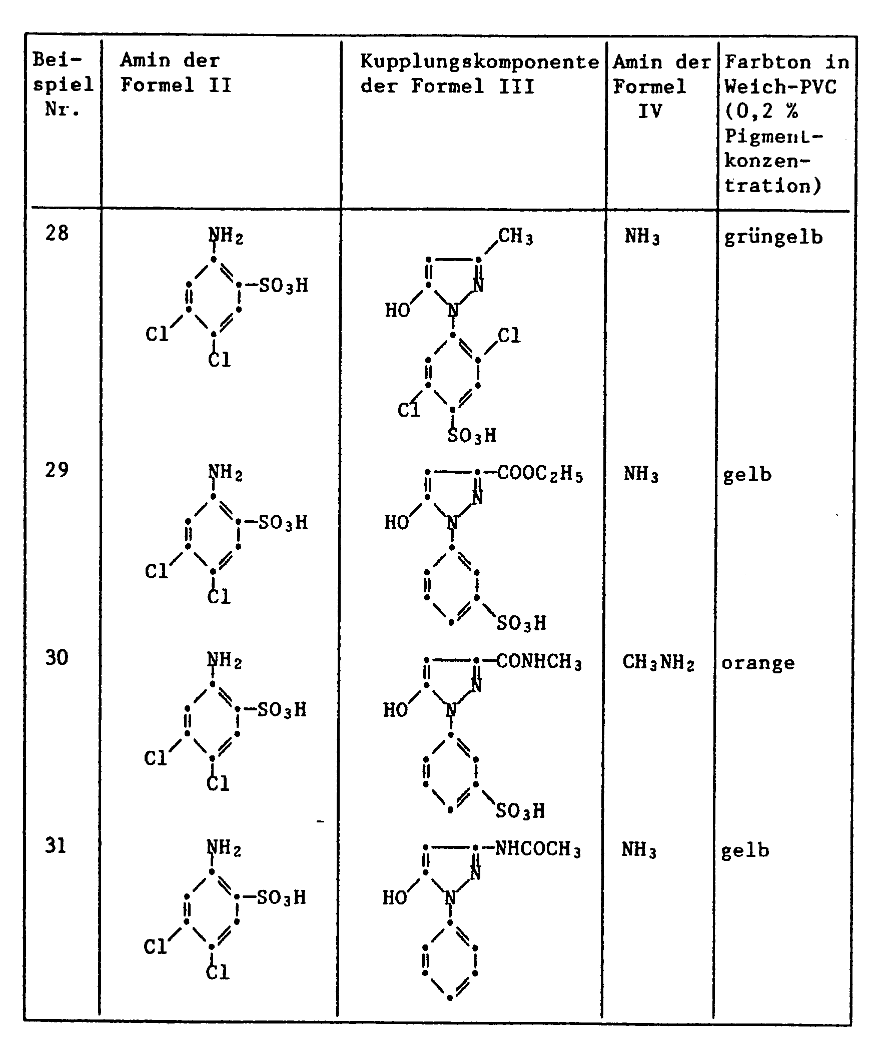

Beispiel 32: 13 g 93%ige 2-Amino-4,5-dichlorbenzolsulfonsäure werden in 90 ml entionisiertem Wasser und 5,7 ml 25%iger Ammoniaklösung gelöst. Die klare rotstichig-violette Lösung wird mit 27,5 ml 23,5%iger Salzsäure versetzt. Die entstehende weisse, dicke Suspension wird auf 5°C abgekühlt und innerhalb von 5 Minuten mit 12,5 ml 4H Natriumnitritlösung versetzt. Zur leicht beigen erhaltenen Suspension tropft man innerhalb von 5 Minuten 15,5 g 90,1%iges 1-(3'-Sulfophenyl)-3-methyl-5-pyrazolon als feine Suspension in 100 ml entionisiertem Wasser zu. Der pH-Wert der erhaltenen blassgelben Suspension wird mit 15,5 ml 25%iger Ammoniaklösung auf 6,5 gestellt. Die nun orange Suspension wird während 3 Stunden gerührt. Die Temperatur der Suspension steigt dabei von 5°C auf 22°C. Nach beendigter Kupplung erwärmt man diese Suspension auf 80°C, rührt sie während 6 Stunden bei dieser Temperatur, lässt sie dann auf Raumtemperatur abkühlen und filtriert sie ab. Der erhaltene Rückstand wird mit wenig entionisiertem Wasser gewaschen und im Vakuum bei 60°C getrocknet. Man erhält 26,9 g (99,5 % d. Th.) eines mit Beispiel 2 identischen Produktes.

Beispiel 33: 5,2 g der im Beispiel 1 angegebenen Azoverbindung (Disulfonsäure) werden in 150 ml entionisiertem Wasser bei 70°C gelöst. Die erhaltene klare rote Lösung wird mit 1,85 g Anilin versetzt. Die entstandene orange Suspension wird während 2 Stunden ohne Heizung gerührt und anschliessend filtriert. Der Rückstand wird mit 100 ml entionisiertem Wasser gewaschen und im Vakuum bei 60°C getrocknet. Man erhält 5,6 g (80,8 % d. Th.) eines orangen Produktes, das strukturell und in allen Eigenschaften mit dem Pigment gemäss Beispiel 1 identisch ist.

## Patentansprüche (Patentansprüche für folgende(n) Vertragsstaat(en): CH, DE, FR, GB, LI)

1. Verbindungen der Formel (I) 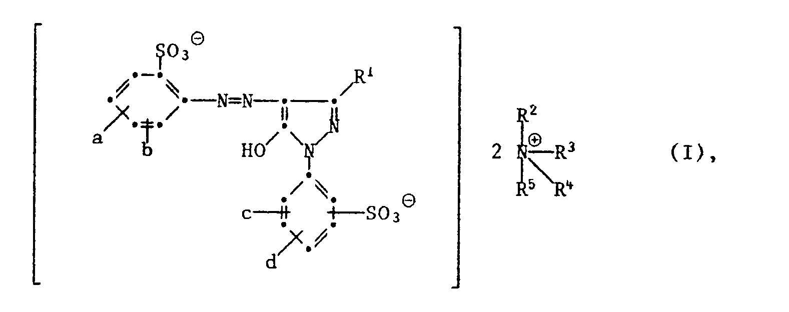 worin a und b unabhängig voneinander Halogen, -CH₃, -C₂H₅, -OCH₃, -OC₂H₅ oder die Gruppe der Formel -NHCOC₁-C₄-Alkyl, c und d unabhängig voneinander -H, Halogen, -CH₃, -C₂H₅, -OCH₃, -OC₂H₅ oder die Gruppe der Formel -NHCOC₁-C₄-Alkyl und R¹ -CH₃, -COOCH₃, -COOC₂H₅, -NHCOC₁-C₄-Alkyl oder -CONHC₁-C₄-Alkyl bedeuten, und R², R³, R⁴ und R⁵ unabhängig voneinander -H, unsubstituiertes oder durch ein Chloratom oder eine HO-Gruppe substituiertes C₁-C₄-Alkyl, C₇-C₉-Aralkyl, C₅-C₈-Cycloalkyl, unsubstituiertes oder durch ein bis drei Halogenatome, Methyl- oder Methoxygruppen substituiertes Phenyl, einen heterocyclischen Rest der Benzimidazol-, Benzoxazol-, Benzthiazol- oder Pyridin-reihe bedeuten, oder R³ und R⁴ zusammen mit dem Stickstoffatom einen Pyrrolidin-, Imidazolidin-, Piperidin-, Piperazin- oder Morpholinrest, oder R³, R⁴ und R⁵ zusammen mit dem Stickstoffatom einen Pyrrol-, Pyridin-, Picolin-, Pyrazin-, Chinolin- oder Isochinolinrest darstellen.

2. Verbindungen der Formel (I) gemäss Anspruch 1, worin a und b unabhängig voneinander -Cl, -Br, -CH₃ oder -OCH₃, c und d unabhängig voneinander -H, -Cl, -Br, -CH₃ oder -OCH₃, R¹ -CH₃, -COOC₂H₅, -CONHCH₃ oder -NHCOCH₃ und R², R³, R⁴ und R⁵ unabhängig voneinander -H oder -CH₃ darstellen.

3. Verbindungen der Formel (I) gemäss Anspruch 2, worin a und b unabhängig voneinander -Cl oder -CH₃, c und d unabhängig voneinander -H, -Cl oder -CH₃, R¹ -CH₃ und R², R³, R⁴ und R⁵ -H bedeuten.

4. Verfahren zur Herstellung der Verbindungen der Formel (I) gemäss Anspruch 1, dadurch gekennzeichnet, dass man eine Diazoverbindung eines Amins der Formel (II) 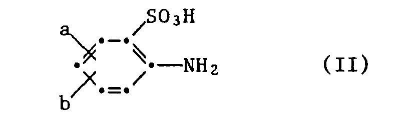 mit einer Kupplungskomponente der Formel (III) 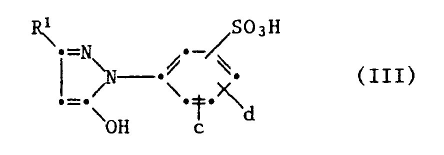 umsetzt und das erhaltene Reaktionsprodukt mit einer Verbindung in der Form ihres Chlorhydrates oder Sulfates der Formel (IV) 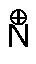 (R²)(R³)(R⁴)(R⁵) behandelt, wobei in den Formeln (II), (III) und (IV) a, b, c, d und R¹ sowie R², R³, R⁴ und R⁵ die im Anspruch 1 angegebene Bedeutung haben.

5. Verwendung der Verbindungen der Formel (I) gemäss Anspruch 1 zum Färben von hochmolekularem organischem Material.

6. Verwendung gemäss Anspruch 5, dadurch gekennzeichnet, dass das hochmolekulare organische Material Polyvinylchlorid oder ein Polyolefin ist.

7. Hochmolekulares organisches Material enthaltend eine Verbindung der Formel (I) gemäss Anspruch 1.

## Patentansprüche (Patentansprüche für folgende(n) Vertragsstaat(en): NL, IT)

1. Verbindungen der Formel (I) 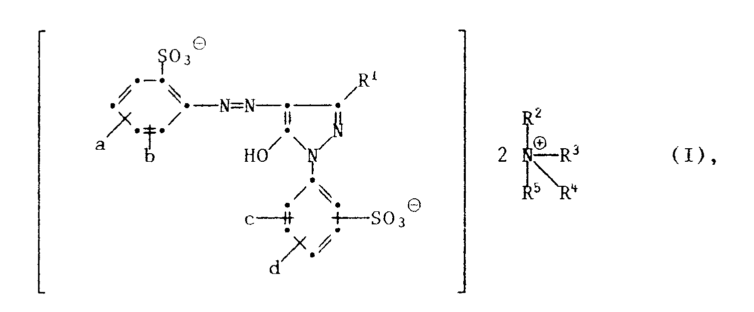 worin a und b unabhängig voneinander Halogen, -CH₃, -C₂H₅, -OCH₃, -OC₂H₅ oder die Gruppe der Formel -NHCOC₁-C₄-Alkyl, c und d unabhängig voneinander -H, Halogen, -CH₃, -C₂H₅, -OCH₃, -OC₂H₅ oder die Gruppe der Formel -NHCOC₁-C₄-Alkyl und R¹ -CH₃, Phenyl, -COOCH₃, -COOC₂H₅, -NHCOC₁-C₄-Alkyl oder -CONHC₁-C₄-Alkyl bedeuten, und R², R³, R⁴ und R⁵ unabhängig voneinander -H, unsubstituiertes oder durch ein Chloratom oder eine HO-Gruppe substituiertes C₁-C₄-Alkyl, C₇-C₉-Aralkyl, C₅-C₈-Cycloalkyl, unsubstituiertes oder durch ein bis drei Halogenatome, Methyl- oder Methoxygruppen substituiertes Phenyl, einen heterocyclischen Rest der Benzimidazol-, Benzoxazol-, Benzthiazol- oder Pyridin-reihe bedeuten, oder R³ und R⁴ zusammen mit dem Stickstoffatom einen Pyrrolidin-, Imidazolidin-, Piperidin-, Piperazin- oder Morpholinrest, oder R³, R⁴ und R⁵ zusammen mit dem Stickstoffatom einen Pyrrol-, Pyridin-, Picolin-, Pyrazin-, Chinolin- oder Isochinolinrest darstellen.

2. Verbindungen der Formel (I) gemäss Anspruch 1, worin a und b unabhängig voneinander -Cl, -Br, -CH₃ oder -OCH₃, c und d unabhängig voneinander -H, -Cl, -Br, -CH₃ oder -OCH₃, R¹ -CH₃, -COOC₂H₅, -CONHCH₃ oder -NHCOCH₃ und R², R³, R⁴ und R⁵ unabhängig voneinander -H oder -CH₃ darstellen.

3. Verbindungen der Formel (I) gemäss Anspruch 2, worin a und b unabhängig voneinander -Cl oder -CH₃, c und d unabhängig voneinander -H, -Cl oder -CH₃, R¹ -CH₃ und R², R³, R⁴ und R⁵ -H bedeuten.

4. Verfahren zur Herstellung der Verbindungen der Formel (I) gemäss Anspruch 1, dadurch gekennzeichnet, dass man eine Diazoverbindung eines Amins der Formel (II) 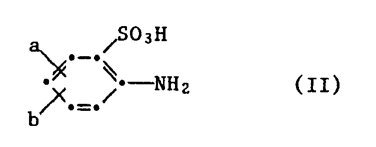 mit einer Kupplungskomponente der Formel (III) 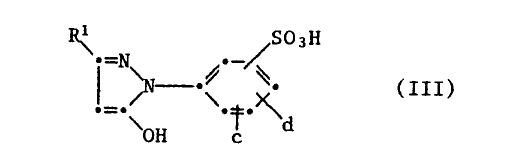 umsetzt und das erhaltene Reaktionsprodukt mit einer Verbindung in der Form ihres Chlorhydrates oder Sulfates der Formel (IV) 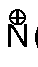 (R²)(R³)(R⁴)(R⁵) behandelt, wobei in den Formeln (II), (III) und (IV) a, b, c, d und R¹ sowie R², R³, R⁴ und R⁵ die im Anspruch 1 angegebene Bedeutung haben.

5. Verwendung der Verbindungen der Formel (I) gemäss Anspruch 1 zum Färben von hochmolekularem organischem Material.

6. Verwendung gemäss Anspruch 5, dadurch gekennzeichnet, dass das hochmolekulare organische Material Polyvinylchlorid oder ein Polyolefin ist.

7. Hochmolekulares organisches Material enthaltend eine Verbindung der Formel (I) gemäss Anspruch 1.

## Claims (Claims for the following Contracting State(s): CH, DE, FR, GB, LI)

1. A compound of formula (I) 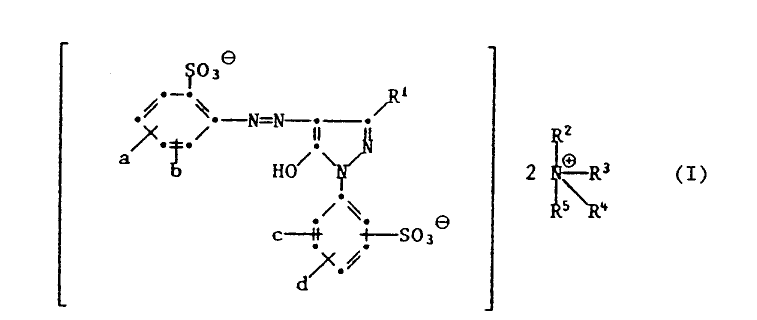 in which a and b are each independently of the other halogen, -CH₃, -C₂H₅, -OCH₃, -OC₂H₅ or the group of formula -NHCOC₁-C₄alkyl, c and d are each independently of the other hydrogen, halogen, -CH₃, -C₂H₅, -OCH₃, -OC₂H₅ or the group of formula -NHCOC₁-C₄alkyl, and R¹ is -CH₃, -COOCH₃, -COOC₂H₅, -NHCOC₁-C₄alkyl or -CONHC₁-C₄alkyl, and R², R³, R⁴ and R⁵ are each independently of one another hydrogen, C₁-C₄alkyl, unsubstituted or substituted by a chlorine atom or an HO- group, or are C₇-C₉aralkyl, C₅-C₈cycloalkyl, phenyl which is unsubstituted or substituted by one to three halogen atoms or methyl or methoxy groups, or are a heterocyclic radical of the benzimidazole, benzoxazole, benzthiazole or pyridine series, or R³ and R⁴, together with the nitrogen atom, are a pyrrolidine, imidazolidine, piperidine, piperazine or morpholine radical, or R³, R⁴ and R⁵, together with the nitrogen atom, are a pyrrole, pyridine, picoline, pyrazine, quinoline or isoquinoline radical.

2. A compound of formula (I) according to claim 1, in which a and b are each independently of the other -Cl, -Br, -CH₃ or -OCH₃, c and d are each independently of the other hydrogen, -Cl, -Br, -CH₃ or -OCH₃, R¹ is -CH₃, -COOC₂H₅, -CONHCH₃ or -NHCOCH₃, and R², R³, R⁴ and R⁵ are each independently of one another hydrogen or -CH₃.

3. A compound of formula (I) according to claim 2, in which a and b are each independently of the other -Cl, or -CH₃, c and d are each independently of the other hydrogen, -Cl, or -CH₃, R¹ is -CH₃ and R², R³, R⁴ and R⁵ are hydrogen.

4. A process for the preparation of a compound of formula (I) according to claim 1, which comprises reacting a diazo compound of an amine of formula (II) 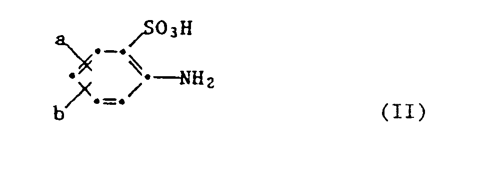 with a coupling component of formula (III) 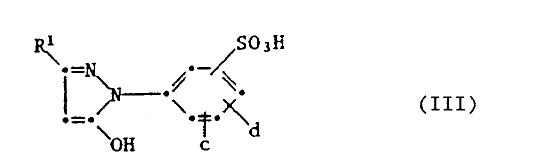 and subsequently treating the reaction product obtained with a compound of formula (IV) N^{⊕}(R²)(R³)(R⁴)(R⁵) in the form of its hydrochloride or sulfate, in which formulae (II), (III) and (IV) a, b, c, d, R¹, R², R³, R⁴ and R⁵ are as defined in claim 1.

5. Use of a compound of formula (I) according to claim 1, for colouring high molecular weight organic material.

6. Use according to claim 5, wherein the high molecular weight organic material is polyvinyl chloride or a polyolefin.

7. High molecular weight organic material containing a compound of formula (I) according to claim 1.

## Claims (Claims for the following Contracting State(s): NL, IT)

1. A compound of formula (I) 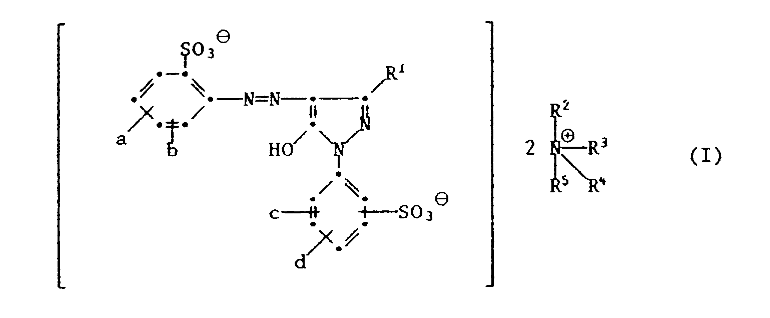 in which a and b are each independently of the other halogen, -CH₃, -C₂H₅, -OCH₃, -OC₂H₅ or the group of formula -NHCOC₁-C₄alkyl, c and d are each independently of the other hydrogen, halogen, -CH₃, -C₂H₅, -OCH₃, -OC₂H₅ or the group of formula -NHCOC₁-C₄alkyl, and R¹ is -CH₃, phenyl, -COOCH₃, -COOC₂H₅, -NHCOC₁-C₄alkyl or -CONHC₁-C₄alkyl, and R², R³, R⁴ and R⁵ are each independently of one another hydrogen, C₁-C₄alkyl, unsubstituted or substituted by a chlorine atom or an HO- group, or are C₇-C₉aralkyl, C₅-C₈cycloalkyl, phenyl which is unsubstituted or substituted by one to three halogen atoms or methyl or methoxy groups, or are a heterocyclic radical of the benzimidazole, benzoxazole, benzthiazole or pyridine series, or R³ and R⁴, together with the nitrogen atom, are a pyrrolidine, imidazolidine, piperidine, piperazine or morpholine radical, or R³, R⁴ and R⁵, together with the nitrogen atom, are a pyrrole, pyridine, picoline, pyrazine, quinoline or isoquinoline radical.

2. A compound of formula (I) according to claim 1, in which a and b are each independently of the other -Cl, -Br, -CH₃ or -OCH₃, c and d are each independently of the other hydrogen, -Cl, -Br, -CH₃ or -OCH₃, R¹ is -CH₃, -COOC₂H₅, -CONHCH₃ or -NHCOCH₃, and R², R³, R⁴ and R⁵ are each independently of one another hydrogen or -CH₃.

3. A compound of formula (I) according to claim 2, in which a and b are each independently of the other -Cl, or -CH₃, c and d are each independently of the other hydrogen, -Cl, or -CH₃, R¹ is -CH₃ and R², R³, R⁴ and R⁵ are hydrogen.

4. A process for the preparation of a compound of formula (I) according to claim 1, which comprises reacting a diazo compound of an amine of formula (II) 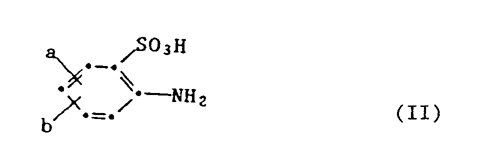 with a coupling component of formula (III) 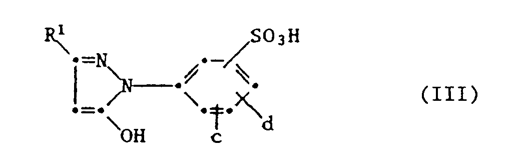 and subsequently treating the reaction product obtained with a compound of formula (IV) N^{⊕}(R²)(R³)(R⁴)(R⁵) in the form of its hydrochloride or sulfate, in which formulae (II), (III) and (IV) a, b, c, d, R¹, R², R³, R⁴ and R⁵ are as defined in claim 1.

5. Use of a compound of formula (I) according to claim 1, for colouring high molecular weight organic material.

6. Use according to claim 5, wherein the high molecular weight organic material is polyvinyl chloride or a polyolefin.

7. High molecular weight organic material containing a compound of formula (I) according to claim 1.

## Revendications (Revendications pour l'(les) Etat(s) contractant(s) suivant(s): CH, DE, FR, GB, LI)

1. Composés répondant à la formule I : 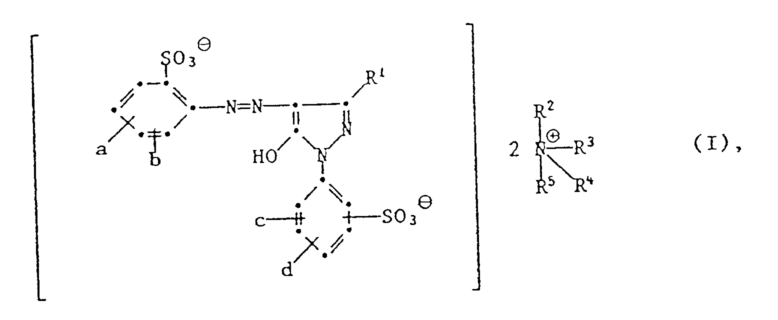 dans laquelle :
a et b représentent chacun, indépendamment l'un de l'autre, un halogène, -CH₃, -C₂H₅, -OCH₃, -OC₂H₅ ou un radical -NHCO-C₁-C₄-alkyl
c et d représentent chacun, indépendamment l'un de l'autre, -H, un halogène, -CH₃, -C₂H₅, -OCH₃, -OC₂H₅ ou un radical -NHCO-C₁-C₄-alkyl,
R¹ représente -CH₃, -COOCH₃, -COOC₂H₅, -NHCO-C₁-C₄-alkyl ou -CONH-C₁-C₄-alkyl, et
R², R³, R⁴ et R⁵ représentent chacun, indépendamment l'un de l'autre, -H, un alkyle en C₁-C₄ non substitué ou porteur d'un atome de chlore ou d'un radical -OH, un aralkyle en C₇-C₉, un cycloalkyle en C₅-C₈, un phényle non substitué ou porteur d'un à trois substituants pris parmi les atomes d'halogènes et les radicaux méthyle et méthoxy, ou un radical hétérocyclique de la série du benzimidazole, du benzoxazole, du benzothiazole ou de la pyridine, ou R³ et R⁴ forment ensemble et avec l'atome d'azote un radical de pyrrolidine, d'imidazolidine, de pipéridine, de pipérazine ou de morpholine, ou R³, R⁴ et R⁵ forment ensemble et avec l'atome d'azote un radical de pyrrole, de pyridine, de picoline, de pyrazine, de quinoléine ou d'isoquinoléine.

2. Composés de formule I selon la revendication 1 dans lesquels a et b représentent chacun, indépendamment l'un de l'autre, -Cl, -Br, -CH₃ ou -OCH₃, c et d représentent chacun, indépendamment l'un de l'autre, -H, -Cl, -Br, -CH₃ ou -OCH₃, R¹ représente -CH₃, -COOC₂H₅, -CONHCH₃ ou -NHCOCH₃, et R², R³, R⁴ et R⁵ représentent chacun, indépendamment l'un de l'autre, -H ou -CH₃.

3. Composés de formule I selon la revendication 2 dans lesquels a et b représentent chacun, indépendamment l'un de l'autre, -Cl ou -CH₃, c et d représentent chacun, indépendamment l'un de l'autre, -H, -Cl ou -CH₃, R¹ représente -CH₃ et R², R³, R⁴ et R⁵ représentent chacun, indépendamment l'un de l'autre, -H

4. Procédé pour préparer les composés de formule I selon la revendication 1, procédé caractérisé en ce qu'on fait réagir un composé diazoïque d'une amine de formule II : 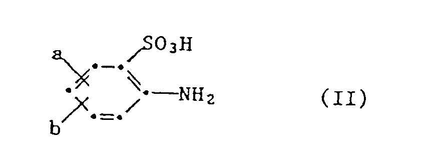 avec un copulant de formule III : 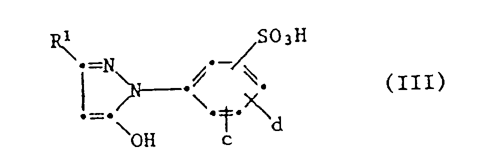 et on traite le produit réactionnel obtenu par un composé sous la forme de son chlorhydrate ou sulfate de formule IV : 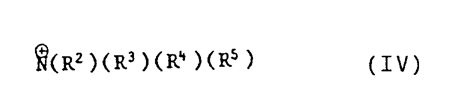 formules dans lesquelles a, b, c, d et R¹ ainsi que R², R³, R⁴ et R⁵ ont les significations qui leur ont été données à la revendication 1.

5. Application des composés de formule I selon la revendication 1 à la teinture de matières organiques à haut poids moléculaire.

6. Application selon la revendication 5 caractérisée en ce que la matière organique à haut poids moléculaire est le poly-(chlorure de vinyle) ou une polyoléfine.

7. Matières organiques à haut poids moléculaire qui contiennent un composé de formule I selon la revendication 1.

## Revendications (Revendications pour l'(les) Etat(s) contractant(s) suivant(s): NL, IT)

1. Composés répondant à la formule I : 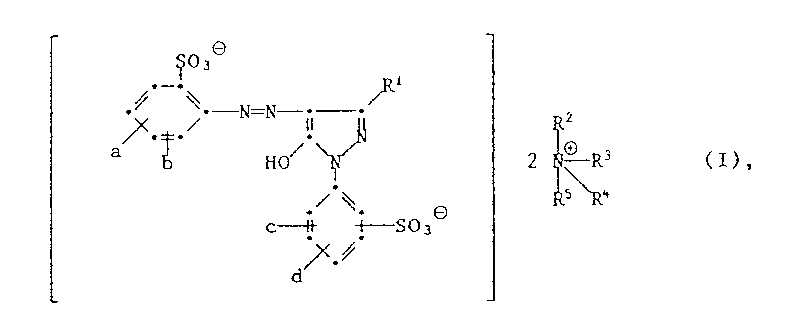 dans laquelle :
a et b représentent chacun, indépendamment l'un de l'autre, un halogène, -CH₃, -C₂H₅, -OCH₃, -OC₂H₅ ou un radical -NHCO-C₁-C₄-alkyl
c et d représentent chacun, indépendamment l'un de l'autre, -H, un halogène, -CH₃, -C₂H₅, -OCH₃, -OC₂H₅ ou un radical -NHCO-C₁-C₄-alkyl,
R¹ représente -CH₃, un phényle, -COOCH₃, -COOC₂H₅, -NHCO-C₁-C₄-alkyl ou -CONH-C₁-C₄-alkyl, et
R², R³, R⁴ et R⁵ représentent chacun, indépendamment l'un de l'autre, -H, un alkyle en C₁-C₄ non substitué ou porteur d'un atome de chlore ou d'un radical -OH, un aralkyle en C₇-C₉, un cycloalkyle en C₅-C₈, un phényle non substitué ou porteur d'un à trois substituants pris parmi les atomes d'halogènes et les radicaux méthyle et méthoxy, ou un radical hétérocyclique de la série du benzimidazole, du benzoxazole, du benzothiazole ou de la pyridine, ou R³ et R⁴ forment ensemble et avec l'atome d'azote un radical de pyrrolidine, d'imidazolidine, de pipéridine, de pipérazine ou de morpholine, ou R³, R⁴ et R⁵ forment ensemble et avec l'atome d'azote un radical de pyrrole, de pyridine, de picoline, de pyrazine, de quinoléine ou d'isoquinoléine.

2. Composés de formule I selon la revendication 1 dans lesquels a et b représentent chacun, indépendamment l'un de l'autre, -Cl, -Br, -CH₃ ou -OCH₃, c et d représentent chacun, indépendamment l'un de l'autre, -H, -Cl, -Br, -CH₃ ou -OCH₃, R¹ représente -CH₃, -COOC₂H₅, -CONHCH₃ ou -NHCOCH₃, et R², R³, R⁴ et R⁵ représentent chacun, indépendamment l'un de l'autre, -H ou -CH₃.

3. Composés de formule I selon la revendication 2 dans lesquels a et b représentent chacun, indépendamment l'un de l'autre, -Cl ou -CH₃, c et d représentent chacun, indépendamment l'un de l'autre, -H, -Cl ou -CH₃, R¹ représente -CH₃ et R², R³, R⁴ et R⁵ représentent chacun, indépendamment l'un de l'autre, -H

4. Procédé pour préparer les composés de formule I selon la revendication 1, procédé caractérisé en ce qu'on fait réagir un composé diazoïque d'une amine de formule II : 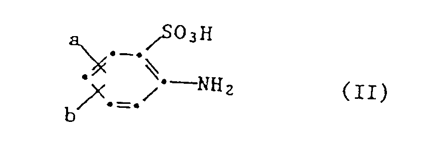 avec un copulant de formule III : 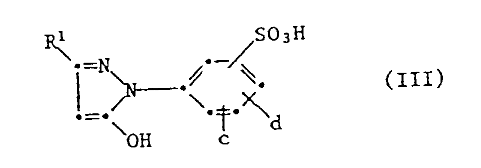 et on traite le produit réactionnel obtenu par un composé sous la forme de son chlorhydrate ou sulfate de formule IV : 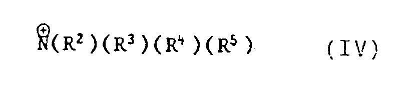 formules dans lesquelles a, b, c, d et R¹ ainsi que R², R³, R⁴ et R⁵ ont les significations qui leur ont été données à la revendication 1.

5. Application des composés de formule I selon la revendication 1 à la teinture de matières organiques à haut poids moléculaire.

6. Application selon la revendication 5 caractérisée en ce que la matière organique à haut poids moléculaire est le poly-(chlorure de vinyle) ou une polyoléfine.

7. Matières organiques à haut poids moléculaire qui contiennent un composé de formule I selon la revendication 1.
